# FASCICULE DE BREVET EUROPEEN

(11) **EP 2 240 986 B1**
(45) Date de publication et mention de la délivrance du brevet: **29.01.2014**
(21) Numéro de dépôt: 08872092.5
(22) Date de dépôt: 05.12.2008
(51) Int. Cl.: H02G 1/08

(54) **PROCEDE D'ENFILAGE DE BRINS D'UN CABLE DANS UN CONDUIT ET SYSTEME ASSOCIE.**
VERFAHREN ZUM EINBRINGEN VON KABELDRÄHTEN IN EINER LEITUNG UND DAZUGEHÖRENDES SYSTEM
METHOD FOR PULLING STRANDS OF A CABLE INTO A CONDUIT AND ASSOCIATED SYSTEM

(30) Priorité: 07.02.2008 FR 0850784
(43) Date de publication de la demande: 20.10.2010
(73) Titulaire: Soletanche Freyssinet SA, 92500 Rueil-Malmaison (FR)
(72) Inventeur: DEGASNE, Joël, F-77600 Conches (FR); LEMOINE, Mathieu, F-02200 Saconin Et Breuil (FR)
(74) Mandataire: Cabinet Plasseraud
(86) Numéro de dépôt international: PCT/FR2008/052230
(87) Numéro de publication internationale: WO 2009/098416

(56) Documents cités:
- EP-A- 0 743 731
- EP-A- 1 580 472
- DE-A1- 3 731 611
- JP-A- 11 336 987
- US-A1- 2005 184 280
- US-B1- 6 916 992

## Description

La présente invention concerne l'enfilage de brins d'un câble dans un conduit.

Un enfilage de brins d'un câble dans un conduit est couramment mis en oeuvre dans un certain nombre de domaines. Il est par exemple utilisé, bien que de façon non exclusive, dans la technique du béton précontraint par post tension, pour installer puis mettre en tension des câbles multi-brins dans des gaines de section circulaire préalablement incorporées au béton, afin de comprimer la structure.

L'enfilage est généralement réalisé à l'aide d'un câble de treuil auquel le ou les brins à enfiler sont provisoirement fixés.

Pour certaines structures imposant un tracé de précontrainte non rectiligne notamment, tels que des dômes impliquant un tracé en forme de U inversé par exemple, le mode traditionnel d'enfilage des brins est cependant inadapté.

En effet, lors de l'enfilage d'un ou plusieurs nouveaux brins, il peut arriver que le câble de treuil pénètre dans le faisceau de brins déjà enfilés, en particulier dans certaines zones non rectilignes du conduit. Ceci nuit à la progression du câble de treuil à l'intérieur du conduit.

Le câble de treuil peut même s'entremêler avec certains des brins déjà enfilés. Dans ce cas, la séparation du câble de treuil et des brins peut s'avérer particulièrement complexe.

A ces inconvénients peut éventuellement s'ajouter l'endommagement des brins déjà enfilés au contact du câble de treuil, qui peut aller par exemple jusqu'à l'arrachage d'une éventuelle gaine plastique entourant ces brins.

EP-A-1 580 472 divulgue un câblage à la demande dans une gaine. Ce câblage s'effectue à l'aide d'un ruban mince auquel est agrafée une extrémité d'un cable de télécommunications. Ce ruban est tiré entre les deux extrémités d'une gaine pour entraîner le câble de télécommunications. De plus, ce ruban est semi-rigide de manière à rester toujours au-dessus des câbles déjà installés dans la gaine.

Un but de la présente invention est de proposer un mode d'enfilage des brins amélioré.

L'invention propose ainsi un procédé d'enfilage par brins ou sous-groupes de brins d'un câble multi-brins à l'intérieur d'un conduit. Selon ce procédé, un brin ou sous-groupe de brins à enfiler est entraîné d'une première à une deuxième extrémité du conduit par déplacement d'un élément d'entraînement en tension auquel le brin ou sous-groupe de brins à enfiler est provisoirement couplé. De plus, l'élément d'entraînement en tension est agencé pour ne pas pénétrer à l'intérieur d'un faisceau de brins déjà enfilés.

Du fait de l'absence de pénétration de l'élément d'entraînement en tension dans le faisceau de brins déjà enfilés, la progression de cet élément d'entraînement à l'intérieur du conduit n'est pas gênée. En outre, il n'y a plus de risque d'entremêlement entre cet élément d'entraînement et le faisceau de brins déjà enfilés. Le risque d'endommagement des brins déjà enfilés par contact avec l'élément d'entraînement est également réduit.

Selon des modes de réalisation avantageux qui peuvent être combinés de toutes les façons envisageables :
- l'élément d'entraînement en tension a des dimensions et/ou une raideur suffisantes pour ne pas tourner sur lui-même ou autour du brin ou sous-groupe de brins à enfiler ;
- l'élément d'entraînement a une dimension transversale adaptée en fonction de l'un au moins parmi : une dimension du conduit, un tracé du conduit, un nombre total de brins du câble multi-brins et un diamètre des brins ;
- l'élément d'entraînement s'étend sur toute la longueur du conduit ;
- le brin ou sous-groupe de brins à enfiler est disposé par rapport à l'élément d'entraînement en tension du même côté que le faisceau de brins déjà enfilés ;
- le brin ou sous-groupe de brins à enfiler est provisoirement couplé à l'élément d'entraînement par accrochage à une navette fixée sur l'élément d'entraînement ;
- la navette est agencée pour ne pas pénétrer à l'intérieur du faisceau de brins déjà enfilés ;
- l'élément d'entraînement est tiré à l'aide d'un premier treuil placé du côté de la deuxième extrémité du conduit ;
- l'élément d'entraînement est relié à un deuxième treuil placé du côté de la première extrémité du conduit ;
- l'élément d'entraînement est mis en tension par la traction exercée par le premier treuil et par un freinage réalisé par le deuxième treuil ;
- le conduit présente un tracé non rectiligne ;
- le conduit comporte une portion présentant une courbure dont le centre de courbure est situé plus bas que la dite portion du conduit ;
- le conduit comporte une portion présentant sensiblement une forme de U inversé ;
- l'élément d'entraînement en tension présente une forme sensiblement continue et plate ;
- l'élément d'entraînement comprend au moins une sangle ;
- l'élément d'entraînement comprend une pluralité d'éléments discontinus disposés le long d'un câble ;
- certains au moins des éléments discontinus sont de forme oblongue ou arrondie ;
- le conduit comporte une portion présentant une courbure et l'espacement entre certains au moins des éléments discontinus est choisi en fonction du rayon de courbure de ladite portion ;
- l'élément d'entraînement a une dimension transversale supérieure à 30% d'une dimension transversale du conduit ;
- l'élément d'entraînement a une dimension transversale sensiblement égale à 60% d'une dimension transversale du conduit ; et/ou
- après enfilage et découplage dudit brin ou sous-groupe de brins, un brin ou sous-groupe de brins suivant à enfiler est entraîné de la deuxième à la première extrémité du conduit par déplacement de l'élément d'entraînement en tension auquel le brin ou sous-groupe de brins suivant à enfiler est provisoirement couplé ; on peut ainsi enfiler des brins ou sous-groupes successifs dans le conduit par déplacement de l'élément d'entraînement, alternativement dans un sens et dans le sens inverse.

L'invention propose aussi un système agencé pour mettre en oeuvre le procédé d'enfilage par sous-groupes de brins d'un câble multi-brins à l'intérieur d'un conduit mentionné ci-dessus. Ce système comprend un élément d'entraînement en tension apte à entraîner par déplacement, d'une première à une deuxième extrémité du conduit, un brin ou sous-groupe de brins à enfiler qui lui est provisoirement couplé par des moyens de couplage. De plus, l'élément d'entraînement en tension est agencé pour ne pas pénétrer à l'intérieur d'un faisceau de brins déjà enfilés.

D'autres particularités et avantages de la présente invention apparaîtront dans la description ci-après d'exemples de réalisation non limitatifs, en référence aux dessins annexés, dans lesquels :
- la figure 1 est un schéma montrant un exemple non limitatif d'enfilage par brins ou sous-groupes de brins d'un câble multi-brins à l'intérieur d'un conduit ;
- la figure 2 est un schéma grossissant un détail présent dans l'encadré de la figure 1, et
- la figure 3 est un schéma montrant un exemple non limitatif de couplage provisoire entre un élément d'entraînement et un brin à enfiler.

Un exemple de réalisation de l'invention va désormais être décrit en référence aux figures.

Dans cet exemple, on cherche à installer un câble multi-brins à l'intérieur d'un conduit. Pour ce faire, les brins destinés à constituer le câble sont enfilés à l'intérieur du conduit, un par un ou par sous-groupes de brins comportant le même nombre de brins ou un nombre de brins différent.

Le câble considéré est par exemple un câble de précontrainte destiné à comprimer une structure en béton dans laquelle le conduit est incorporé. Dans ce cas, les brins constitutifs du câble peuvent par exemple être des torons métalliques comprenant six fils périphériques torsadés autour d'un fil central, chaque toron étant éventuellement recouvert d'une gaine individuelle en matière plastique.

Bien sûr, le mode d'enfilage des brins qui va être décrit ci-dessous est également applicable à d'autres types de câbles et pour d'autres utilisations.

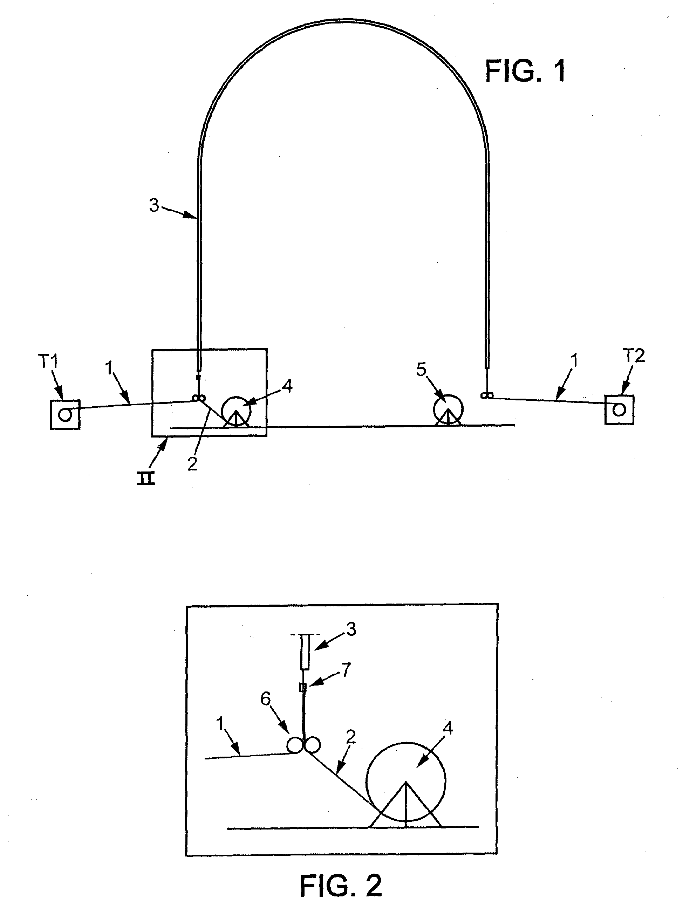

La figure 1 montre un conduit 3 présentant une forme de U inversé. Autrement dit, le conduit 3 possède deux portions verticales reliées par une portion en arc de cercle dont le centre est situé plus bas que cet arc. Cette forme de conduit peut par exemple se trouver dans des structures surmontées d'un dôme en béton, tels que certains bâtiments nucléaires par exemple.

Bien sûr, d'autres formes de conduit pourraient également être envisagées. A titre d'exemple, le conduit pourrait comporter une portion possédant une courbure, autre qu'un arc de cercle, dont le centre de courbure serait situé plus bas que ladite portion du conduit. Il pourrait par exemple s'agir d'une courbure en forme d'ellipse.

Plus généralement, le conduit pourrait présenter n'importe quel type de tracé non rectiligne, avec par exemple des angles ou des coudes. On notera aussi que l'invention serait également applicable en relation avec un conduit au tracé rectiligne.

Dans la suite de la description, on se place à un instant donné de l'installation du câble. A cet instant, on considère qu'un certain nombre de brins ont été déjà enfilés à l'intérieur du conduit 3. Ces brins déjà enfilés forment un faisceau (non représenté) qui s'étend à l'intérieur du conduit 3 et est plaqué au fond de celui-ci, par effet de la gravité, dans sa portion en arc de cercle située dans la partie supérieure du U inversé.

En fonction de l'instant d'observation choisi, le nombre de brins déjà enfilés constituant le faisceau peut aller de zéro, lorsqu'on se place au tout début de l'installation du câble, au nombre total de brins constitutifs du câble multi-brins moins le nombre de brins du dernier brin ou sous-groupe de brins à enfiler, lorsqu'on se place à l'instant précédant le dernier enfilage de brins avant achèvement de l'installation du câble.

A cet instant de l'installation du câble, on enfile un nouveau brin ou sous-groupe de brins 2, pour qu'il vienne s'ajouter au faisceau de brins déjà enfilés.

Initialement, le brin ou sous-groupe de brins 2 est avantageusement enroulé sur une bobine 4. Dans ce cas, une extrémité de ce brin ou sous-groupe de brins est extraite de la bobine pour être couplée provisoirement avec un élément d'entraînement 1 mis en tension à travers le conduit 3 lors de l'opération d'enfilage.

Dans l'exemple illustré sur la figure 1, la mise en tension de l'élément d'entraînement 1 est réalisée par l'action simultanée d'un treuil de halage T2 qui tire à lui l'élément d'entraînement 1, et d'un treuil de freinage T1 qui ralentit la progression de l'élément d'entraînement 1 vers le treuil T2 à travers le conduit 3. D'autres modes de mise en tension de l'élément d'entraînement 1 peuvent bien sûr être également envisagés. Cette mise en tension peut par exemple être assurée par une retenue contrôlée du brin ou sous-groupe de brins 2 avant son entrée dans le conduit 3, par exemple au niveau de la bobine 4.

L'action coordonnée des treuils T1 et T2 conduit au déplacement de l'élément d'entraînement 1, maintenu en tension, à l'intérieur du conduit 3 depuis l'extrémité gauche jusqu'à l'extrémité droite de ce conduit (selon la configuration représentée sur la figure 1).

Le brin ou sous-groupe de brins 2 étant couplé à l'élément d'entraînement 1, il suit sa progression dans tout le conduit 3, jusqu'à ce que son extrémité qui avait été introduite du côté gauche du conduit sorte du côté droit de ce même conduit, s'ajoutant ainsi au faisceau de brins déjà enfilés.

Le brin ou sous-groupe de brins 2 peut alors être découplé de l'élément d'entraînement 1. Il peut ensuite éventuellement être plaqué vers l'intérieur du conduit 3 et ancré provisoirement à ses extrémités si nécessaire.

Lorsque le brin ou sous-groupe de brins 2 n'est pas le dernier à devoir être enfilé dans le conduit 3, l'enfilage des brins ou sous-groupes de brins suivants peut se poursuivre de façon similaire.

Cet enfilage ultérieur peut être effectué à partir du côté droit du conduit 3, en utilisant par exemple une bobine 5 sur laquelle le prochain brin ou sous-groupe de brins à enfiler est enroulé, puis alternativement à partir des côtés gauche et droit du conduit 3, les treuils T2 et T1 assurant à tour de rôle les fonctions de halage et de freinage. En variante, l'enfilage peut se faire toujours à partir du côté gauche du conduit 3, par exemple en ramenant l'élément d'entraînement 1 "à vide" vers le côté gauche du conduit 3.

Dans l'exemple illustré sur la figure 1, l'élément d'entraînement 1 s'étend sur toute la longueur du conduit 3.

L'élément d'entraînement 1 en tension est agencé pour ne pas pénétrer à l'intérieur du faisceau de brins déjà enfilés. Il possède une portance ou flottabilité suffisante à cet effet.

La forme, les dimensions, la rigidité ou encore d'autres paramètres caractéristiques de l'élément d'entraînement 1 peuvent être choisis de façon appropriée pour éviter une telle pénétration dans le faisceau de brins déjà installés.

Selon un exemple avantageux, une dimension transversale de l'élément d'entraînement 1, telle que sa largeur, peut être choisie en fonction d'une dimension transversale du conduit 3, tel que son diamètre ou un de ses diamètres, ou d'autres dimensions de ce conduit.

En effet, une largeur de l'élément d'entraînement 1 proche de celle du diamètre du conduit 3 lui évitera de se mêler aux brins déjà installés, y compris dans la portion en arc de cercle du conduit 3, où cet élément d'entraînement s'appuie fortement sur le faisceau de brins, du fait notamment de la gravité. Cependant, une trop grande largeur de l'élément d'entraînement 1 pourrait empêcher ce dernier de se déplacer à l'intérieur du conduit 3 lorsque le faisceau de brins déjà enfilés est conséquent et occupe une majorité de la section de ce conduit.

Un compromis sur la largeur de l'élément d'entraînement 1 pourra donc avantageusement être recherché, comme cela apparaîtra à l'homme du métier, afin d'empêcher la pénétration de l'élément d'entraînement 1 à l'intérieur du faisceau de brins déjà installés, tout en permettant une circulation aisée de cet élément d'entraînement 1 à l'intérieur du conduit 3, y compris lorsqu'un grand nombre de brins ou sous-groupes de brins ont déjà été enfilés.

Une largeur de l'élément d'entraînement 1 supérieure à 30% d'une dimension transversale, comme par exemple le plus petit diamètre, du conduit 3 peut être utilisée. Une valeur autour de 60% du diamètre du conduit 3 semble même être particulièrement appropriée.

Alternativement ou en complément, la largeur de l'élément d'entraînement 1 peut être choisie en fonction du diamètre des brins. Par exemple, la largeur de l'élément d'entraînement 1 en tension pourrait être choisie d'autant plus grande que le diamètre des brins constitutifs du câble à installer est faible, de façon à éviter que les brins déjà enfilés puissent contourner l'élément d'entraînement 1 et éventuellement s'entremêler avec lui.

Toujours en complément ou en alternative, la largeur de l'élément d'entraînement 1 en tension peut être adaptée en fonction du tracé du conduit 3 et/ou du nombre total de brins constitutifs du câble à installer.

De même, l'élément d'entraînement 1 pourra avantageusement être suffisamment rigide pour ne pas risquer de s'introduire entre les brins du faisceau de brins déjà enfilés. Il pourra néanmoins être choisi suffisamment souple pour pouvoir se déplacer à l'intérieur du conduit 3, y compris dans ses portions non rectilignes, lorsqu'il est tendu. Là encore, un compromis pourra être recherché, comme cela apparaîtra à l'homme du métier.

Les différents paramètres caractéristiques de l'élément d'entraînement 1 peuvent aussi être réglés en relation avec la tension exercée sur cet élément d'entraînement.

De façon avantageuse, l'élément d'entraînement 1 en tension a des dimensions et/ou une raideur suffisantes, ou encore d'autres paramètres caractéristiques choisis pour qu'il ne tourne pas sur lui-même ou autour du brin ou sous-groupe de brins 2 à enfiler.

En empêchant la rotation sur lui-même de l'élément d'entraînement 1, on évite d'entraver son déplacement au sein du conduit 3, tout en préservant un maximum d'espace dans la section de ce conduit pour enfiler de nouveaux brins ou sous-groupes de brins. On renforce aussi la résistance à la pénétration de l'élément d'entraînement 1 dans le faisceau des brins déjà enfilés.

En empêchant la rotation de l'élément d'entraînement 1 autour du brin ou sous-groupe de brins 2 à enfiler, on facilite leur découplage et donc la réutilisation éventuelle de l'élément d'entraînement 1 pour enfiler les brins ou sous-groupes de brins suivants.

L'élément d'entraînement 1 peut prendre des formes diverses, pourvu qu'il présente une portance linéique suffisante pour éviter sa pénétration à l'intérieur du faisceau de brins déjà enfilés, lorsqu'il est tendu.

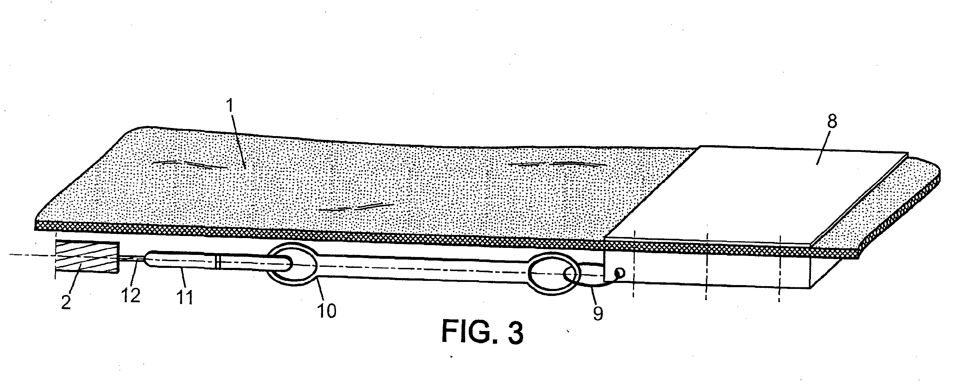

De façon avantageuse, l'élément d'entraînement 1 en tension peut présenter une forme sensiblement continue et plate. Il peut par exemple s'agir d'une bande textile ou en fibre synthétique, comme cela est schématisé sur l'exemple de la figure 3.

Les matériaux utilisés pour cet élément d'entraînement 1 peuvent varier selon les besoins, notamment selon la constitution des brins déjà enfilés. Ainsi, lorsque les brins en question sont des torons entourés d'une gaine plastique, il peut être avantageux d'utiliser un élément d'entraînement comportant une matière plastique identique ou similaire.

Les matériaux peuvent aussi être choisis pour limiter les frottements entre l'élément d'entraînement 1 et les brins déjà enfilés.

Une sangle peut par exemple faire office d'un tel élément d'entraînement continu et plat. Une succession de sangles mises bout à bout peut également être envisagée, notamment dans le cas où la longueur du conduit 3 rendrait difficile l'usage d'une sangle unique.

En variante, l'élément d'entraînement peut comprendre une pluralité d'éléments discontinus répartis sur sa longueur. Il peut ainsi s'agir d'un câble le long duquel sont disposés des éléments de forme oblongue ou arrondie, telles que des boules. Dans ce dernier cas, le diamètre des boules, leur espacement ainsi que leurs propriétés mécaniques, telle que leur rigidité, sont avantageusement choisis pour empêcher la pénétration du câble à l'intérieur du faisceau de brins déjà enfilés. En ce qui concerne l'espacement entre les brins, il est avantageusement choisi en fonction du rayon de courbure présenté par une portion courbe du conduit.

La figure 2 fait apparaître, de manière grossie, le détail encadré de la figure 1 relatif au couplage, c'est-à-dire à la jonction, entre l'élément d'entraînement 1 et le brin ou sous-groupe de brins 2 à enfiler.

Dans cet exemple non limitatif, l'élément d'entraînement 1 et le brin ou sous-groupe de brins 2 à enfiler sont débités simultanément à partir du treuil T1 et de la bobine 4 respectivement, grâce à la traction exercée par le treuil T2. Des roues de déviation 6 permettent de rassembler l'élément d'entraînement 1 et le brin ou sous-groupe de brins 2 selon une même direction à l'entrée du conduit.

Puis, l'une des extrémités du brin ou sous-groupe de brins 2 est provisoirement couplée à l'élément d'entraînement 1, à l'aide d'un dispositif d'attelage 7, dont un exemple sera décrit plus bas en référence à la figure 3. Le dispositif d'attelage 7 est par exemple situé vers le milieu de l'élément d'entraînement 1, de façon à pouvoir se déplacer entre les deux extrémités du conduit 3 lors du halage de l'élément d'entraînement 1 par le treuil T2 ou le treuil T1 alternativement.

Bien sûr, le dispositif d'attelage 7 pourrait être disposé différemment en fonction de la configuration retenue. Lorsque le brin ou sous-groupe de brins à enfiler 2 a été entraîné de l'extrémité gauche à l'extrémité droite du conduit 3 à l'aide de l'élément d'entraînement 1, le dispositif d'attelage 7 sort à l'extrémité droite du conduit 3, après avoir parcouru entièrement ce dernier. Par une manipulation appropriée du dispositif d'attelage 7, on peut alors découpler l'élément d'entraînement 1 et le brin ou sous-groupe de brins 2.

Comme cela apparaît schématiquement sur les figures 1 et 2, le brin ou sous-groupe de brins 2 est avantageusement positionné à droite de l'élément d'entraînement 1 avant son entrée dans le conduit 3. De ce fait, ce brin ou sous-groupe de brins 2 se situe du même côté que le faisceau de brins déjà enfilés, par rapport à l'élément d'entraînement 1.

En effet, dans l'exemple illustré, les brins déjà enfilés (non représentés) sont plaqués au fond (vers l'intérieur) du conduit 3, par effet de la gravité, dans sa portion en arc de cercle située dans la partie supérieure du U inversé. Ainsi, l'élément d'entraînement 1, lors de sa course à l'intérieur du conduit 3, recouvre le faisceau de brins déjà enfilés, ainsi que le brin ou sous-groupe de brins 2 à enfiler en amont du dispositif d'attelage 7.

Grâce à cet agencement, le brin ou sous-groupe de brins 2 est amené directement sur le faisceau de brins déjà enfilés, sans que d'autres manipulations soient nécessaires. En outre, une fois découplé d'avec le brin ou sous-groupe de brins 2, l'élément d'entraînement 1 peut repartir en sens inverse, grâce à une traction exercée par le treuil T1, sans modification de son positionnement relatif par rapport au faisceau de brins déjà enfilés. Une autre possibilité consiste à reprendre une opération d'enfilage en sens inverse.

La figure 3 montre un exemple non limitatif de dispositif d'attelage entre un élément d'entraînement 1 prenant la forme d'une sangle, et un brin prenant la forme d'un toron 2, lequel comprend par exemple six fils périphériques torsadés autour d'un fil central 12.

Le dispositif d'attelage représenté comprend une navette 8 fixée sur l'élément d'entraînement 1. Dans cet exemple, la navette est formée de deux plaques, par exemple en métal, serrées l'une contre l'autre autour de l'élément d'entraînement 1.

Le toron 2 à enfiler est accroché à cette navette par des moyens appropriés, qui comprennent, dans l'exemple illustré sur la figure 3, un émerillon 11 agencé pour s'accrocher au fil central 12 du toron 2, ainsi qu'un un mousqueton 9 connectant l'émerillon 11 à la navette 8 par l'intermédiaire d'une câblette à double boucle 10. La fermeture du mousqueton 9 sur un trou ménagé dans la navette 8 permet le couplage entre le toron et la sangle. Son ouverture permet le découplage.

Avantageusement, la navette utilisée a elle-même une portance suffisante qui l'empêche de pénétrer à l'intérieur du faisceau de brins déjà enfilés. Comme pour l'élément d'entraînement 1, ceci peut être réalisé notamment par le choix d'une forme, de dimensions telle qu'une largeur, d'une rigidité ou encore d'autres paramètres caractéristiques appropriés de cette navette.

Bien sûr, d'autres types de dispositifs d'attelage peuvent également convenir pour assurer un couplage provisoire entre un brin ou sous-groupe de brins et l'élément d'entraînement, comme cela apparaîtra à l'homme du métier.

Le procédé et le système qui viennent d'être décrits permettent donc d'installer un câble multi-brins par enfilage successif des brins ou sous-groupes de brins destinés à former ce câble, de manière à éviter toute pénétration et donc tout entremêlement entre l'élément d'entraînement d'un nouveau brin ou sous-groupe de brins à enfiler avec le faisceau de brins déjà enfilés.

Il en résulte une efficacité accrue de l'enfilage des brins ou sous-groupes de brins et donc une installation plus simple, moins coûteuse et plus rapide du câble. Ce résultat est en particulier, mais non exclusivement, atteint, lorsque le câble doit suivre un tracé non rectiligne, dans lequel l'élément d'entraînement aurait tendance à s'enfoncer dans le faisceau de brins déjà enfilés par effet de la gravité et/ou du tracé du conduit, s'il n'était pas agencé comme prévu par l'invention.

## Revendications

1. Procédé d'enfilage brins ou sous-groupes de brins d'un câble multi-brins à l'intérieur d'un conduit (3), dans lequel un brin ou sous-groupe de brins (2) à enfiler est entraîné d'une première à une deuxième extrémité du conduit par déplacement d'un élément d'entraînement (1) en tension auquel le brin ou sous-groupe de brins à enfiler est provisoirement couplé, l'élément d'entraînement en tension étant agencé pour ne pas pénétrer à l'intérieur d'un faisceau de brins déjà enfilés, l'élément d'entraînement étant en outre tiré à l'aide d'un premier treuil (T2) placé du côté de la deuxième extrémité du conduit et relié à un deuxième treuil (T1) placé du côté de la première extrémité du conduit, l'élément d'entraînement étant mis en tension par la traction exercée par le premier treuil et par un freinage réalisé par le deuxième treuil.

2. Procédé selon la revendication 1, dans lequel l'élément d'entraînement (1) en tension a des dimensions et/ou une raideur suffisantes pour ne pas tourner sur lui-même ou autour du brin ou sous-groupe de brins (2) à enfiler.

3. Procédé selon la revendication 1 ou 2, dans lequel l'élément d'entraînement (1) a une dimension transversale adaptée en fonction de l'un au moins parmi : une dimension du conduit (3), un tracé du conduit, un nombre total de brins du câble multi-brins et un diamètre des brins.

4. Procédé selon l'une quelconque des revendications précédentes, dans lequel l'élément d'entraînement (1) s'étend sur toute la longueur du conduit.

5. Procédé selon la revendication 4, dans lequel le brin ou sous-groupe de brins (2) à enfiler est disposé par rapport à l'élément d'entraînement (1) en tension du même côté que le faisceau de brins déjà enfilés.

6. Procédé selon l'une quelconque des revendications précédentes, dans lequel le brin ou sous-groupe de brins (2) à enfiler est provisoirement couplé à l'élément d'entraînement (1) par accrochage à une navette (8) fixée sur l'élément d'entraînement.

7. Procédé selon l'une quelconque des revendications précédentes, dans lequel le conduit (3) présente un tracé non rectiligne.

8. Procédé selon la revendication 7, dans lequel le conduit (3) comporte une portion présentant une courbure dont le centre de courbure est situé plus bas que la dite portion du conduit, telle qu'une portion présentant sensiblement une forme de U inversé.

9. Procédé selon l'une quelconque des revendications précédentes, dans lequel l'élément d'entraînement (1) en tension présente une forme sensiblement continue et plate.

10. Procédé selon l'une quelconque des revendications précédentes, dans lequel l'élément d'entraînement (1) comprend une pluralité d'éléments discontinus disposés le long d'un câble.

11. Procédé selon la revendication 10, dans lequel certains au moins des éléments discontinus sont de forme oblongue ou arrondie.

12. Procédé selon l'une quelconque des revendications précédentes, dans lequel l'élément d'entraînement (1) a une dimension transversale supérieure à 30% d'une dimension transversale du conduit (3).

13. Procédé selon la revendication 12, dans lequel l'élément d'entraînement (1) a une dimension transversale sensiblement égale à 60% d'une dimension transversale du conduit (3).

14. Procédé selon l'une quelconque des revendications précédentes, dans lequel, après enfilage et découplage dudit brin ou sous-groupe de brins (2), un brin ou sous-groupe de brins suivant à enfiler est entraîné de la deuxième à la première extrémité du conduit par déplacement de l'élément d'entraînement (1) en tension auquel le brin ou sous-groupe de brins suivant à enfiler est provisoirement couplé.

15. Système agencé pour mettre en oeuvre le procédé d'enfilage de brins ou sous-groupes de brins d'un câble multi-brins à l'intérieur d'un conduit (3) selon l'une quelconque des revendications précédentes, le système comprenant un élément d'entraînement (1) en tension apte à entraîner par déplacement, d'une première à une deuxième extrémité du conduit, un brin ou sous-groupe de brins (2) à enfiler qui lui est provisoirement couplé par des moyens de couplage, l'élément d'entraînement en tension étant agencé pour ne pas pénétrer à l'intérieur d'un faisceau de brins déjà enfilés.

## Patentansprüche

1. Verfahren zum Einbringen von Drähte oder Drahtgruppen eines mehrdrahtigen Kabels in das Innere eines Leitungsrohrs (3), wobei ein einzuziehender Draht oder eine einzuziehende Drahtgruppe (2) durch Verschieben eines unter Zugspannung stehenden Mitnahmeelements (1), mit welchem der einzuziehende Draht oder die einzuziehende Drahtgruppe lösbar verbunden ist, von einem ersten zu einem zweiten Ende des Leitungsrohrs mitgenommen wird, wobei das unter Zugspannung stehende Mitnahmeelement derart eingerichtet ist, dass es nicht in das Innere eines Bündels bereits eingezogener Drähte eindringt, wobei außerdem das Mitnahmeelement mit Hilfe einer auf der Seite des zweiten Endes des Leitungsrohrs angeordneten ersten Winde (T2) gezogen wird und mit einer auf der Seite des ersten Endes des Leitungsrohrs angeordneten zweiten Winde (T1) verbunden ist, wobei das Mitnahmeelement durch die von der ersten Winde ausgeübte Zugkraft und durch die von der zweiten Winde ausgeübte Bremskraft unter Zugspannung gesetzt wird.

2. Verfahren nach Anspruch 1, wobei das unter Zugspannung stehende Mitnahmeelement (1) ausreichende Abmessungen und/oder eine ausreichende Steifigkeit hat, so dass es sich nicht um sich selbst dreht oder sich um den einzuziehenden Draht oder die einzuziehende Drahtgruppe dreht.

3. Verfahren nach Anspruch 1 oder 2, wobei das Mitnahmeelement (1) eine in Abhängigkeit von mindestens einem der folgenden Faktoren angepasste transversale Abmessung hat: Abmessung des Leitungsrohrs (3), Verlauf des Leitungsrohrs, Gesamtzahl der Drähte des mehrdrahtigen Kabels und Durchmesser der Drähte.

4. Verfahren nach einem der vorstehenden Ansprüche, wobei das Mitnahmeelement (1) sich über die gesamte Länge des Leitungsrohrs erstreckt.

5. Verfahren nach Anspruch 4, wobei der einzuziehende Draht oder die einzuziehende Drahtgruppe (2) auf der - bezüglich des unter Zugspannung stehenden Mitnahmeelements (1) - gleichen Seite wie das Bündel bereits eingezogener Drähte angeordnet ist.

6. Verfahren nach einem der vorstehenden Ansprüche, wobei der einzuziehende Draht oder die einzuziehende Drahtgruppe (2) durch Einhängen in ein an dem Mitnahmeelement angebrachtes Schiffchen (8) lösbar mit dem Mitnahmeelement (1) verbunden wird.

7. Verfahren nach einem der vorstehenden Ansprüche, wobei das Leitungsrohr (3) einen nicht geradlinigen Verlauf aufweist.

8. Verfahren nach Anspruch 7, wobei das Leitungsrohr (3) einen Abschnitt mit einer Krümmung, deren Krümmungsmittelpunkt tiefer angeordnet ist als der Abschnitt des Leitungsrohrs, beispielsweise einen Abschnitt ungefähr in Form eines umgekehrten U, aufweist.

9. Verfahren nach einem der vorstehenden Ansprüche, wobei das unter Zugspannung stehende Mitnahmeelement (1) eine im Wesentlichen kontinuierliche und flache Form aufweist.

10. Verfahren nach einem der vorstehenden Ansprüche, wobei das Mitnahmeelement (1) mehrere entlang eines Kabels angeordnete diskontinuierliche Elemente aufweist.

11. Verfahren nach Anspruch 10, wobei mindestens einige der diskontinuierlichen Elemente eine längliche oder abgerundete Form aufweisen.

12. Verfahren nach einem der vorstehenden Ansprüche, wobei das Mitnahmeelement (1) eine transversale Abmessung von mehr als 30% einer transversalen Abmessung des Leitungsrohrs (3) aufweist.

13. Verfahren nach Anspruch 12, wobei das Mitnahmeelement (1) eine transversale Abmessung von ungefähr gleich 60% einer transversalen Abmessung des Leitungsrohrs (3) aufweist.

14. Verfahren nach einem der vorstehenden Ansprüche, wobei nach Einziehen und Aushängen des Drahts oder der Drahtgruppe ein anschließend einzuziehender Draht oder eine anschließend einzuziehende Drahtgruppe durch Verschieben des unter Zugspannung stehenden Mitnahmeelements (1), mit welchem der anschließend einzuziehende Draht oder die anschließend einzuziehende Drahtgruppe lösbar verbunden ist, von dem zweiten zum ersten Ende des Leitungsrohrs mitgenommen wird.

15. System zum Durchführen des Verfahrens zum Einbringen von Drähte oder Drahtgruppen eines mehrdrahtigen Kabels in das Innere eines Leitungsrohrs (3) nach einem der vorstehenden Ansprüche, wobei das System ein unter Zugspannung stehendes Mitnahmeelement (1) aufweist, das durch Verschieben von einem ersten zu einem zweiten Ende des Leitungsrohrs einen einzuziehenden Draht oder eine einzuziehende Drahtgruppe, der oder die mit Hilfe von Verbindungsmitteln lösbar mit ihm verbunden ist, mitnehmen kann, wobei das unter Zugspannung stehende Mitnahmeelement derart konzipiert ist, dass es nicht in das Innere eines Bündels von bereits eingezogenen Drähten eindringt.

## Claims

1. Method for pulling strands or sub-groups of strands of a multi-strand cable inside a conduit (3), in which a strand or sub-group of strands (2) to be pulled is conveyed from a first to a second end of the conduit by movement of a drive element (1) in tension to which the strand or sub-group of strands to be pulled is temporarily coupled, the drive element in tension being designed not to enter a bundle of previously installed strands, the drive element also being pulled with the help of a first winch (T2) placed at the second end of the conduit and connected to a second winch (T1) placed at the first end of the conduit, the drive element being tensioned by the traction exerted by the first winch and by a braking carried out by the second winch.

2. Method according to claim 1, in which the drive element (1) in tension has sufficient dimensions and/or sufficient rigidity not to turn on itself or around the strand or sub-group of strands (2) to be pulled.

3. Method according to claim 1 or 2, in which the drive element (1) has a transverse dimension adapted depending on at least one of: a dimension of the conduit (3), a line of the conduit, a total number of strands of the multi-strand cable and a diameter of the strands.

4. Method according to any of the previous claims, in which the drive element (1) extends over the entire length of the conduit.

5. Method according to claim 4, in which the strand or sub-group of strands (2) to be pulled is arranged relative to the drive element (1) in tension on the same side as the bundle of previously installed strands.

6. Method according to any one of the previous claims, in which the strand or sub-group of strands (2) to be pulled is temporarily coupled to the drive element (1) by fastening to a shuttle (8) fixed on the drive element.

7. Method according to any one of the previous claims, in which the conduit (3) has a non-rectilinear line.

8. Method according to claim 7, in which the conduit (3) comprises a portion having a curvature, the centre of curvature of which is situated lower than said portion of the conduit, such that a portion having a substantially inverted U-shape.

9. Method according to any one of the previous claims, in which the drive element (1) in tension has a substantially continuous and flat shape.

10. Method according to any one of the previous claims, in which the drive element (1) comprises a plurality of non-continuous elements arranged along a cable.

11. Method according to claim 10, in which at least some of the non-continuous elements have an oblong or rounded shape.

12. Method according to any one of the previous claims, in which the drive element (1) has a transverse dimension greater than 30% of a transverse dimension of the conduit (3).

13. Method according to claim 12, in which the drive element (1) has a transverse dimension substantially equal to 60% of a transverse dimension of the conduit (3).

14. Method according to any one of the previous claims, in which, after pulling and uncoupling of said strand or sub-group of strands (2), a following strand or sub-group of strands to be pulled is conveyed from the second to the first end of the conduit by movement of the drive element (1) in tension to which the following strand or sub-group of strands to be pulled is temporarily coupled.

15. System designed to implement the method for pulling strands or sub-groups of strands of a multi-strand cable inside a conduit (3) according to any one of the previous claims, the system comprising a drive element (1) in tension suitable for conveying, by movement from a first to a second end of the conduit, a strand or sub-group of strands (2) to be pulled that is temporarily coupled to it by coupling means, the drive element in tension being designed not to enter a bundle of previously installed strands.
